# FASCICULE DE BREVET EUROPEEN

(11) **EP 1 783 394 B1**
(45) Date de publication et mention de la délivrance du brevet: **10.12.2008**
(21) Numéro de dépôt: 06301111.8
(22) Date de dépôt: 02.11.2006
(51) Int. Cl.: F16D 59/00

(54) **Dispositif de sécurité de transmission mécanique par engrenage irréversible a l'arrêt**
Sicherheitsvorrichtung für ein mechanisches Getriebe mittels einer Blockierverzahnung
Safety device for a mechanical transmission by means of a blocking gearing

(30) Priorité: 03.11.2005 FR 0553324
(43) Date de publication de la demande: 09.05.2007
(73) Titulaire: Unicum Transmission de Puissance, 42000 Saint-Etienne (FR)
(72) Inventeur: Fauriaux, Samuel, 94370, Sucy en Brie (FR); Letourneau, Daniel Paul, 77120, Mouroux (FR)
(74) Mandataire: Dupuis, François

(56) Documents cités:
- DE-A1- 2 939 799
- GB-A- 1 285 300
- GB-A- 2 155 887
- US-A- 4 156 521
- US-A- 4 236 694
- US-A- 4 463 933
- US-A- 5 324 007
- US-A- 5 421 553

## Description

L'invention se rattache au secteur technique des moteurs réducteurs applicables notamment dans le transfert de charge selon des fonctionnements réversibles. L'invention se rattache plus particulièrement à des ensembles moteurs réducteurs qui sont associés à des treuils pour le transfert de charge.

Le problème posé à l'origine de l'invention a été celui du transport de véhicules par wagons sur deux niveaux, un niveau inférieur fixe, et un niveau supérieur défini par une plateforme mobile pouvant en situation repos horizontal recevoir un ou des véhicules, et en position fonctionnelle abaissée permettant le chargement ou déchargement des véhicules et similaires. L'exécution de cette manipulation s'effectue par des opérateurs physiques qui interviennent manuellement sur la commande de treuils associés à des réducteurs. Des moyens de transmission avec câbles, poulies de renvoi équipent les wagons. Les réducteurs utilisés sont du type roue et vis irréversibles et les arbres de commandes qui sont sollicités par des poignées ou barres de commande débordent du plan du wagon pour offrir un accès sur les deux côtés longitudinaux.

En pratique, cette manipulation est peu pratique, génère des efforts sur la barre de commande pouvant aller jusqu'à 50 Kg. Si l'on considère le nombre de manipulations à exécuter par l'opérateur sur des trains de wagons et à longueur de journée, les solutions actuelles ne sont guère satisfaisantes.

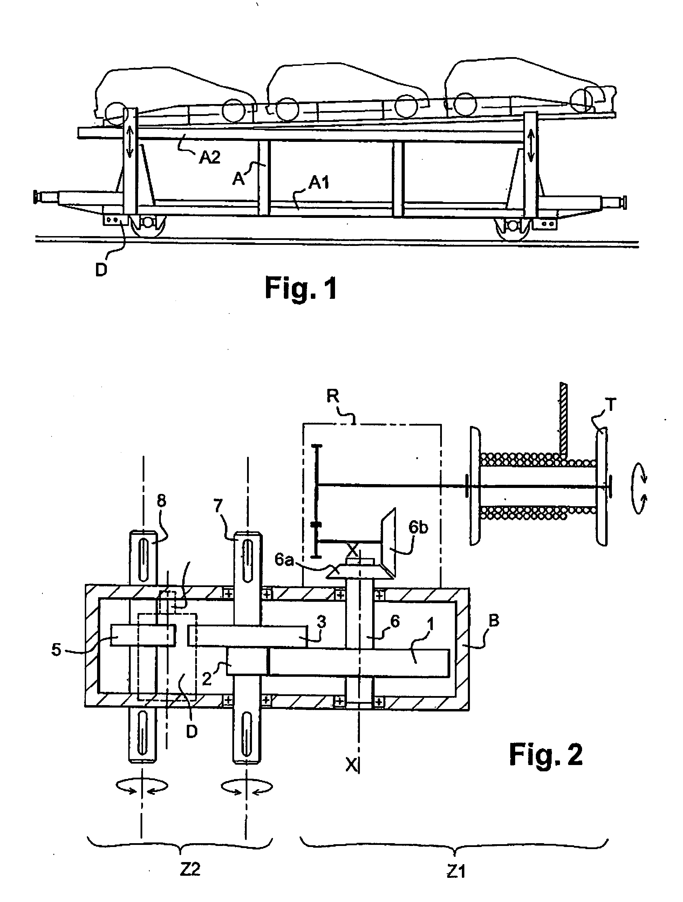

On a ainsi illustré figure 1 à titre d'exemple non limitatif le positionnement d'un dispositif de manoeuvre.

Pour remédier à ces inconvénients, une première possibilité a été la recherche de la réduction des forces engendrées pour la manipulation par une conception de réducteurs plus complexes avec des coefficients de multiplication plus importants. Cette solution offre plusieurs contraintes, une augmentation du coût du dispositif et de son volume, un nombre de tours plus conséquent à réaliser par l'opérateur de par la démultiplication augmentée. Par ailleurs, l'utilisation de moyens de sécurité complémentaire reste nécessaire en égard des charges soulevées, de plusieurs voitures sur le même pont par exemple.

Une autre solution a été envisagée avec l'utilisation de réducteurs irréversibles qui sont connus en soi pour assurer des fonctions de blocage et anti-retour lorsqu'un couple est exercé en sortie de réducteur. Dans l'exemple d'application à la base de la réflexion du Demandeur, ce type de matériel convient en terme de sécurité pour le maintien à l'arrêt en position horizontale de la plateforme supérieure réceptrice de charge telle que celle de plusieurs véhicules. Par contre, ce matériel est inapproprié pour répondre à la seconde fonction de la plateforme supérieure qui doit être abaissée pour permettre le chargement / déchargement des véhicules.

L'environnement technique, à partir du problème posé ne permettait pas de résoudre ce dernier.

On connait par ailleurs dans le brevet US 5 421 553 un dispositif de sécurité de transmission mécanique par engrenage irréversible à l'arrêt selon le préambule de la revendication 1.

Le Demandeur a alors recherché d'autres solutions qui répondent aux objectifs visés et finalement le Demandeur s'est orienté de manière inattendue sur l'utilisation de réducteurs réversibles en intégrant un dispositif de sécurité particulier objet de l'invention. Ce dispositif permet en situation normale de transport de charge d'utiliser les fonctions et les avantages du réducteur irréversible en bloquant en position d'arrêt la partie support de charge à solliciter, et en contrepartie en situation particulière de suspendre la fonction d'irréversibilité provisoirement pour exécuter par exemple une opération de transfert de charge.

La solution mise au point par le Demandeur trouve bien sûr une application intéressante et judicieuse pour le transport de véhicules sur wagons, mais d'autres utilisations sont possibles appliquées au fonctionnement de treuils, de nacelles et similaires.

Selon une première caractéristique de l'invention, le dispositif de sécurité de transmission mécanique par engrenage irréversibles à l'arrêt, lesdits engrenages étant intégrés dans un boîtier de protection d'un ensemble réducteur avec au moins un arbre de commande pouvant être sollicité en sens horaire ou antihoraire, ledit réducteur étant susceptible de coopérer avec des moyens du type treuil de manutention, est remarquable en ce qu'il comprend un arbre monté en parallèle par rapport à au moins un arbre de commande, ledit arbre étant monté non entraîné et pouvant tourner entre les parois du boîtier, et ayant une capacité de déplacement axial, ledit arbre recevant un pignon baladeur et étant accouplé à celui-ci par un moyen de liaison et d'entraînement, ledit pignon baladeur étant commandé en rotation par rapport à l'arbre par l'arbre de commande, et en ce que ledit arbre est agencé de part et d'autres de la position du pignon baladeur avec des moyens autorisant selon le sens de rotation de l'arbre de commande une mise en position des mécanismes en situation de fonction d'irréversibilité, et dans l'autre sens en position de désactivation de la fonction d'irréversibilité permettant temporairement et ponctuellement l'exécution d'une manoeuvre déterminée de transfert de charges.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique illustrant l'application du dispositif de l'invention sur un wagon de transport de véhicule.
- la figure 2 est une vue du dispositif de sécurité matérialisé dans son ensemble par (D) à l'intérieur d'un boîtier de réducteur qui est associé à d'autres mécanismes en vue du transfert de mouvement sur le tambour d'un treuil de manutention.
- la figure 3 est une vue partielle en coupe montrant le dispositif de l'invention, le pignon baladeur n'étant pas représenté pour la clarté et la compréhension de l'invention.
- la figure 4 est une vue partielle en coupe selon la figure 3 de l'ensemble du dispositif de l'invention avec le pignon baladeur, et ce, en fonctionnement descente de la charge.
- la figure 5 est une vue partielle en coupe selon la figure 3 de l'ensemble du dispositif de l'invention avec le pignon baladeur, et ce, en fonctionnement montée de la charge.
- la figure 6 est une vue en variante du dispositif de l'invention en fonctionnement descente de charge.
- la figure 7 est une vue selon la figure 6 du dispositif en fonctionnement montée de charge.

Afin de rendre plus concret l'objet de l'invention, on le décrit maintenant d'une manière non limitative illustrée aux figures des dessins.

Pour la compréhension de l'invention, on a illustré à titre non limitatif son application sur les wagons de transport de véhicules. Figure 1, un wagon (A) a été représenté avec une plateforme inférieure fixe (A1) et une plateforme supérieure (A2) mobile par rapport à une extrémité en pouvant recevoir des véhicules. L'abaissement contrôlé et sécurisé de cette plateforme s'effectue par l'utilisation d'un réducteur associé à un treuil avec tambour sur lequel s'enroule des câbles, et les moyens de transmission par engrenage classique.

Pour permettre les manipulations de chaque côté du wagon, deux arbres sont montés traversants parallèles, avec leurs extrémités débordantes pour autoriser le positionnement de moyens de commande manuel à barre ou similaire. On a ainsi représenté figure 2 la position des deux arbres de commande participant à la mise en oeuvre de l'invention.

En se référant à la figure 2, la partie réducteur est incluse dans un boîtier de configuration parallélépipédique avec intérieurement deux zones (Z1) (Z2), la zone (Z1) recevant l'arbre de transmission (6) selon un axe xx dans un plan transversal au boîtier (B). L'arbre (6) déborde dudit boîtier pour recevoir un engrenage à denture conique (6a) coopérant avec un autre engrenage de renvoi à denture conique (6b) perpendiculaire monté avec les moyens de transmission nécessaires pour la commande du tambour (T) d'un treuil de manutention par exemple.

Ainsi le boîtier est accouplé avec un autre corps récepteur (R) de moyens de transmission dont l'un coopère avec la sortie de l'arbre (6). Ledit corps est accouplé quant à lui au tambour (T) récepteur des câbles à enrouler ou à dérouler.

La zone (Z2) du boîtier reçoit les moyens de l'invention.

Deux arbres (7) et (8) sont disposés transversaux dans le boîtier et sont parallèles à l'arbre (6). Des pignons (1), (2), (3), (5) sont ainsi montés respectivement sur l'arbre (6) pour le pignon (1), sur l'arbre (7) pour les pignons (2) et (3), sur l'arbre (8) pour le pignon (5), pour permettre le transfert des mouvements. Les rapports dimensionnels des pignons sont établis de manière appropriée. Des moyens de roulement conventionnels sont disposés dans des logements récepteurs établis sur les faces latérales en regard du boîtier.

Le dispositif de sécurité (D) selon l'invention s'intègre ainsi de la manière suivante en incluant les moyens ci-après dont la fonction originale sera de permettre selon les phases de fonctionnement le maintien de l'irréversibilité du réducteur à l'arrêt.

Plus particulièrement, le dispositif inclut un arbre fileté (9) non entraîné disposé dans un plan parallèle aux autres arbres (7) et (8) en étant positionné et fixé par ses extrémités dans des parois aménagées du boîtier et pouvant tourner entre les parois du boîtier. Cet arbre fileté est sensiblement décalé dans le plan par rapport aux arbres (7) et (8). L'arbre (9) reçoit dans sa partie centrale filetée (9.1) un pignon baladeur (4) qui est lui-même taraudé sur toute son épaisseur pour une meilleure répartition du couple à transmettre, ainsi qu'un meilleur guidage. Le pignon baladeur (4) est à déplacement axial et est susceptible de tourner librement sur l'arbre (9) de part ses contacts et prises avec les pignons (3) et (5).

Sous-jacent au pignon baladeur (4) sont disposés une roue libre (10) montée serrée sur l'arbre (9), ainsi qu'une pièce de friction (11) conformée en cuvette et entourant sur l'extérieur ladite roue libre dans une fonction anti-retour. Ce sous-ensemble constitué par la roue libre (10) et la pièce de friction est en contact permanent avec une seconde pièce de friction (12) montée autour de l'extrémité de l'arbre et de manière flottante à l'encontre de moyens (13) ayant une capacité élastique de déformation.

La pièce de friction flottante (12) présente une configuration en cuvette dont la face de fond est en contact et appui avec la face de fond de la pièce de friction fixe (11), et dans la partie cuvette, elle reçoit le moyen (13) établi par exemple sous forme de deux rondelles dites « Belleville » réglées pour un couple suffisant créant un couple résiduel statique sur l'arbre (9). Les rondelles (13) prennent appui sur une bague de roulement de maintien qui vient en léger débordement de l'extrémité de l'arbre (9). A cet endroit seront prévus des moyens (26) et (27) permettant de réajuster le couple de calage en cas d'usure des moyens de friction (11) et (12). Il s'agit essentiellement d'une plaque rondelle (26) centrée dans l'ouverture de guidage de l'arbre (9), avec une vis de compression (27) traversant une bride de maintien fixée à la paroi en regard du boîtier. La rondelle (26) prend appui sur la bague extérieure de l'organe de roulement de l'arbre (9). La bague de friction (12) flottante se déplace axialement et est maintenue en position radiale par des doigts (28) ou ergots de positionnement fixés à partir de la paroi intérieure en regard du boîtier.

A l'opposé de ces premiers moyens disposés sur l'arbre (9) d'un côté de celui-ci, on décrit ci-après l'agencement complémentaire de l'autre extrémité de l'arbre (9).

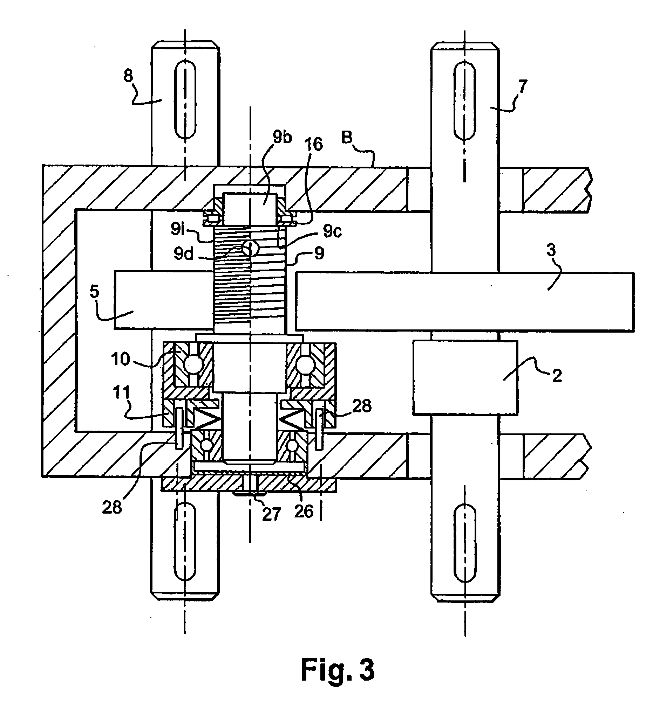

Tout d'abord, l'autre extrémité de l'arbre (9) présente au-delà de la partie filetée, une portée de section (9b) plus réduite définissant un épaulement (9c) en venant se centrer dans un logement prévu à cet effet dans la paroi en regard dudit boîtier récepteur. Soit la paroi présente un logement borgne comme cela est représenté aux figures 3, 4 et 5, soit le logement est débouchant et une bride de fermeture est disposée et vient en regard de l'extrémité dudit arbre. Une butée à aiguilles (16) est ainsi disposée entre la paroi ou logement formé dans ladite paroi du boîtier et la partie épaulée de l'arbre (9) pour assurer ou non un contact selon les phases de fonctionnement, avec ou non une immobilisation totale du pignon baladeur (4).

En outre, le pignon baladeur (4) est agencé avec une ouverture radiale (4a) pour la réception d'une goupille d'entraînement (22). Il est prévu un jeu indispensable entre le diamètre de la goupille solidaire de l'arbre (9) et le diamètre du trou (9d) formé dans le trou récepteur de ladite goupille dans le pignon baladeur et autoriser, ainsi qu'il apparaît aux figures des dessins, le fonctionnement du dispositif dans les différentes phases de chargement ou déchargement.

La construction du dispositif et le positionnement des éléments constitutifs ayant été décrits, il y a lieu alors d'exposer le fonctionnement du dispositif de sécurité en faisant référence par exemple et non limitativement à l'application aux wagons de transport de véhicules.

### Mise en situation

La charge qui est en aval crée une inversion de sens de toute la chaîne cinématique interne par apport au sens préférentiel des arbres de commande (7) et (8).
Le pignon baladeur (4) à déplacement axial est sollicité et va tourner librement sur l'arbre (9) qui est équipé avec les moyens limiteurs de couple statique, à savoir les deux bagues anti-friction fixe (11) flottante (12). Le pignon baladeur va venir faire un effort de serrage sur les butées à aiguilles (16) qu'il va rencontrer, d'où une immobilisation totale du pignon baladeur (4), ainsi que de l'ensemble de la cinématique. On est en situation d'irréversibilité.

### Descente de la charge

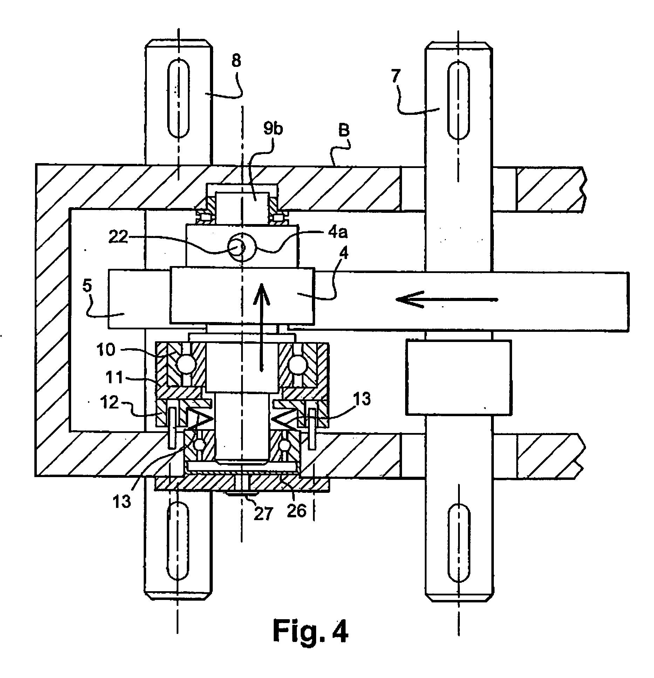

Il convient d'agir et de commander soit l'arbre (7), soit l'arbre (8) par tous moyens, manuel, électrique, pneumatique. L'effort exercé entraîne le pignon baladeur (4) et la goupille d'entraînement (22) sur l'arbre (9). Cette action sera suffisamment importante pour permettre l'entraînement lors d'une manoeuvre d'un couple supérieur au couple statique des moyens limiteurs de couple (11-12). En se référant à la figure 4, on voit que la goupille (22) vient en appui vers la gauche contre le pignon baladeur. Dans cette configuration de descente de la charge, tous les composants sont sollicités et la roue libre est en prise. Les pièces de friction (11) et (12) créent un couple résiduel statique sur l'arbre (9), celui-ci devenant un anti-retour statique permanent permettant la retenue de la charge maximum déterminée pour chaque application. Lesdites pièces de friction (11-12) qui assurent le freinage statique sur l'arbre (9) ne sont sollicitées seulement et uniquement dans la configuration de la descente permettant une retenue de la charge à descendre. Dans cette situation, le réducteur est en situation de fonctionnement irréversible.

### Montée de la charge

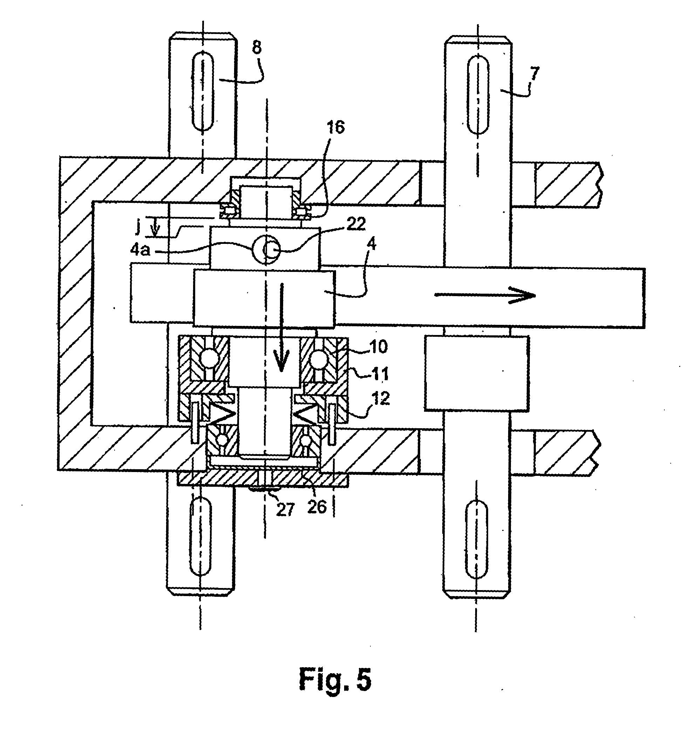

En se référant à la figure 5, l'un des arbres (7) ou (8) est sollicité et manoeuvré dans le sens horaire. Les pignons (3) ou (5) entraînent le pignon baladeur (4) en translation. La goupille d'entraînement (22) montée sur l'arbre (9) et sollicitée par le pignon baladeur (4) entraîne l'arbre (9) qui est légèrement décalé et détaché de tout contact avec la butée à aiguille (16) en faisant apparaître un jeu (J) minime de quelques dixièmes de millimètres, mais suffisant pour désaccoupler l'ensemble et supprimer temporairement la fonction « irréversibilité ». En se référant à la figure 5, la position de la goupille (22) est déplacée par rapport au pignon baladeur en opposition à la position illustrée figure 4. Dans cette situation, la roue libre (10) n'est plus en prise, et de ce fait, il n'y a plus de contrainte transférée du couple statique résiduel due à l'entraînement du limiteur de couple. On obtient un rendement optimum de la chaîne cinématique quel que soit l'arbre (7) ou (8) de commande utilisé.

Lorsque la manoeuvre de montée est stoppée, l'effort de la charge sur le treuil opère un léger retour en arrière de quelques degrés. La chaîne des pignons (1, 2, 3) sollicite instantanément le pignon baladeur (4) qui vient à nouveau en butée sur le roulement à butée à aiguilles (16) en créant à nouveau une situation d'irréversibilité. Tous les composants de la chaîne cinématique sont en attente d'une nouvelle manoeuvre.

Ainsi, le dispositif de sécurité objet de l'invention est susceptible d'agir ponctuellement et temporairement sur les composants du réducteur réversible pour assurer de manière originale le désaccouplement du pignon baladeur pour suspendre le temps de l'opération de manoeuvre de la charge. La fonction d'irréversibilité connue et assurant toute la stabilité et la sécurité de l'installation dans laquelle le dispositif de l'invention est préservé, et ce, même sous un effet permanent de charge sur le treuil.

L'utilisation de deux arbres de commandes (7-8) permet d'obtenir par le montage de pignons qui leur sont associés des rapports de vitesse différents et permettant d'exercer des efforts variables selon le rapport choisi entre les deux arbres de commande (7-8).

L'invention s'applique aussi dans le cas où il n'y a qu'un seul arbre de commande.

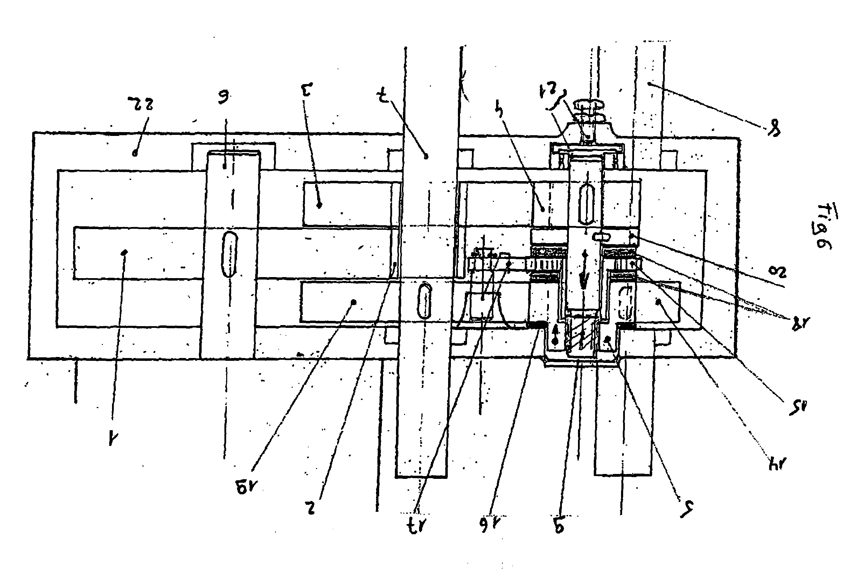

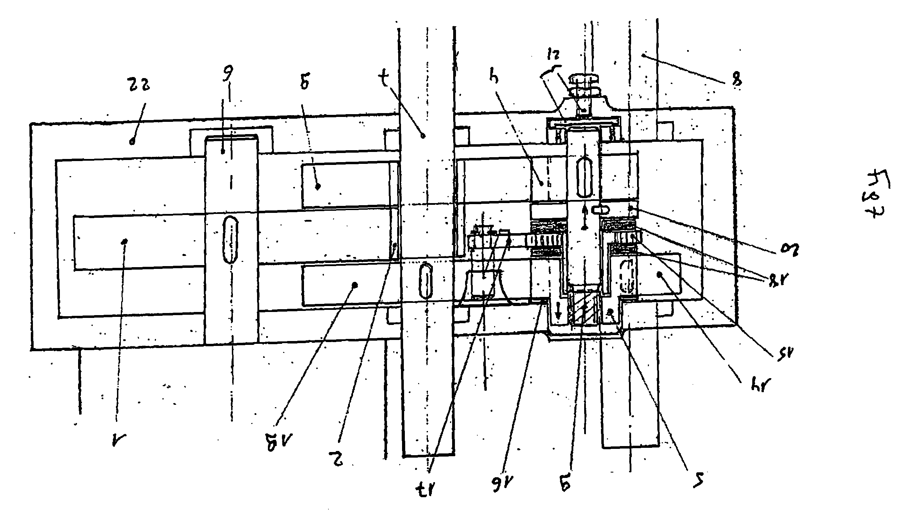

On a représenté figures 6 et 7, une variante de mise en oeuvre de l'invention reprenant le principe de base intégralement avec le déplacement instantané de deux pièces permettant le freinage rapide et assurant la fonction d'irréversibilité quelle que soit la charge variable devant être maintenue en freinage statique.

Sur les figures 6 et 7, le dispositif est plus spécialement adapté avec un mécanisme de même nature sous une charge variable et toujours par freinage automatique intégré.
Les mêmes références concernent les mêmes pièces ou composants du dispositif et on retrouve les ensembles d'arbres (7) (8) d'une part pour les petites vitesses des grosses charges et, d'autre part, grandes vitesses des petites charges.
Dans cette solution, le dispositif de roue libre (10) initialement prévu avec des moyens presseurs et de fixation a été remplacé par une roue à rochet (15) et un ensemble cliquet-ressort de rappel (17) qui donne plus de souplesse au fonctionnement du dispositif et mieux adapté à des variations de charges.

On a ainsi conçu un rapprochement de l'arbre (9) et du pignon intermédiaire (5) qui enserrent l'ensemble patin ferrodo (18), roue à rochet (15) et cliquet ressort de rappel (17), le tout étant retenu en rotation par le cliquet quelle que soit la charge à stopper dans la version statique.
Dans la manoeuvre de descente des charges, les pignons (14) (19) montés sur les arbres (7) (8), selon l'arbre de commande utilité et le rapport désiré, entraînent les pignons (5) dans le sens horaire pour l'accompagnement de la charge avec une retenue automatique par l'intermédiaire du cliquet (17) prisonnier dans la roue à rochet (15).
Concernant la montée de charge, la manoeuvre inverse sera appliquée par les pignons (14) (19) en sens anti-horaire, permettant de libérer le cliquet de son empreinte, ce qui permet l'arrêt en rotation donc au freinage, sous la charge.
L'ensemble reste irréversible sous la charge, même minime.

On a représenté aux dessins la rondelle flottante inférieure anti-coincement par (20), celle-ci étant solidaire de l'arbre (9), un ensemble vis-coupelles (21) pour le rattrapage de jeux des patins de ferodo (18) et par (22) le carter extérieur.

Comme illustré aux dessins, la rondelle (16) flottante, montée en bout du pignon (5) contre le bâti, assure une fonction d'anti-coincement de l'ensemble de freinage, devenu monobloc sous la charge, et permet un desserrage aisé de manoeuvre de remontée de charges en facilitant le desserrage des arbres (9) et (5).

Le freinage automatique et instantané de l'ensemble demeure tant que ne sont pas sollicités les arbres de commande (7) (8) par l'opérateur.

On a cité à titre d'exemple l'application de l'invention à la manutention par treuil de plateforme de wagons. En pratique, l'invention peut être utilisée dans toutes les opérations de transfert de charge.

## Revendications

1. Dispositif de sécurité de transmission mécanique par engrenages irréversibles à l'arrêt, lesdits engrenages étant intégrés dans un boîtier de protection d'un ensemble réducteur avec au moins un arbre de commande pouvant être sollicité en sens horaire ou antihoraire, ledit réducteur étant susceptible de coopérer avec des moyens du type treuil de manutention, le dispositif comprenant un arbre (9) monté en parallèle par rapport à au moins un arbre de commande (7-8), ledit arbre (9) pouvant tourner entre les parois du boîtier, ledit arbre recevant un pignon baladeur (4) et étant accouplé à celui-ci par un moyen de liaison (22) et d'entraînement, ledit pignon baladeur étant commandé en rotation par rapport à l'arbre (9) par l'arbre de commande (7-8), et en ce que ledit arbre est agencé de part et d'autres de la position du pignon baladeur avec des moyens autorisant selon le sens de rotation de l'arbre de commande une mise en position des mécanismes en situation de fonction d'irréversibilité, et dans l'autre sens en position de désactivation de la fonction d'irréversibilité permettant temporairement et ponctuellement l'exécution d'une manoeuvre déterminée de transfert de charges, **caractérisé en ce que** ledit arbre (9) étant monté non entraîné et ayant une capacité de déplacement axial.

2. Dispositif selon la revendication 1, **caractérisé en ce que** l'arbre (9) reçoit dans sa partie centrale filetée (9.1) un pignon baladeur (4) qui est lui-même taraudé sur toute son épaisseur pour une meilleure répartition du couple à transmettre, ainsi qu'un meilleur guidage, et **en ce que** le pignon baladeur (4) est à déplacement axial et est susceptible de tourner librement sur l'arbre (9) de part ses contacts et prises avec des pignons (3) et (5), et **en ce que**, le pignon baladeur (4) est agencé avec une ouverture radiale (4a) pour la réception d'une goupille d'entraînement (22), l'arbre présentant un trou (9d) de réception de la goupille, et **en ce qu'**un jeu entre le diamètre de la goupille solidaire de l'arbre (9) et le diamètre du trou (9d) formé dans le trou récepteur de ladite goupille dans le pignon baladeur autorise le basculement limité de ladite goupille.

3. Dispositif selon les revendications 1 et 2 ensemble, **caractérisé en ce que** sous-jacent au pignon baladeur (4) sont disposés une roue libre (10) montée serrée sur l'arbre (9), ainsi qu'une pièce de friction (11) conformée en cuvette et entourant sur l'extérieur ladite roue libre dans une fonction anti-retour, et **en ce que** ce sous-ensemble est en contact permanent avec une seconde pièce de friction (12) montée autour de l'extrémité de l'arbre et de manière flottante à l'encontre de moyens (13) ayant une capacité élastique de déformation.

4. Dispositif selon la revendication 3, **caractérisé en ce que** la pièce de friction flottante (12) présente une configuration en cuvette dont la face de fond est en contact et appui avec la face de fond de la pièce de friction fixe (11), et dans la partie cuvette, elle reçoit le moyen (13) établi sous forme de deux rondelles dites « Belleville » réglées pour un couple suffisant créant un couple résiduel statique sur l'arbre (9).

5. Dispositif selon la revendication 4 **caractérisé en ce que** les rondelles (13) prennent appui sur une bague de roulement de maintien qui vient en léger débordement de l'extrémité de l'arbre (9), et **en ce que** des moyens (26) et (27) disposés en extrémité permettent de réajuster le couple de calage en cas d'usure des moyens de friction (11) et (12).

6. Dispositif selon la revendication 5, **caractérisé en ce que** les moyens (26) (27) sont constitués par une plaque rondelle (26) centrée dans l'ouverture de guidage de l'arbre (9), avec une vis de compression (27) traversant une bride de maintien fixée à la paroi en regard du boîtier.

7. Dispositif selon la revendication 4, **caractérisé en ce que** la bague de friction (12) flottante se déplace axialement et est maintenue en position radiale par des doigts (28) ou ergots de positionnement fixés à partir de la paroi intérieure en regard du boîtier.

8. Dispositif selon les revendications 1 et 2 ensemble, **caractérisé en ce que** l'autre extrémité de l'arbre (9) présente au-delà de la partie filetée, une portée de section (9b) plus réduite définissant un épaulement (9c) en venant se centrer dans un logement prévu à cet effet dans la paroi en regard dudit boîtier récepteur, et **en ce qu'**une butée à aiguilles (16) est disposée entre la paroi ou logement formé dans ladite paroi du boîtier et la partie épaulée de l'arbre (9) pour assurer ou non un contact selon les phases de fonctionnement, avec ou non une immobilisation totale du pignon baladeur (4).

9. Dispositif selon la 2, **caractérisé en ce qu'**il comprend une roue à rochet (15) et un ensemble cliquet ressort de rappel (17), et **en ce que** le rapprochement de l'arbre (9) et du pignon (5) intermédiaire, enserre un ensemble patin ferodo (18), roue à rochet (15) et cliquet à ressort de rappel (17), le tout étant mise en mouvement de rotation par le cliquet (17).

10. Dispositif selon les revendications 1 et 2, **caractérisé en ce qu'**il comprend une rondelle (16) montée flottante en bout de pignon (5), contre le bâti et asssure une fonction d'anti-coincement, de l'ensemble de freinage.

## Claims

1. Safety device for mechanical transmission by irreversible gears when stopped, the said gears being incorporated in a protective casing of a gear reducer with at least one drive shaft which can be actuated in the clockwise or anticlockwise direction, the said gear reducer being capable of cooperating with means of the handling winch type, the device comprising a shaft (9) mounted in parallel to at least one drive shaft (7-8), the said shaft (9) rotating between the walls of the casing, the said shaft receiving a sliding gear (4) and being coupled thereto by linkage and drive means (22), the said sliding gear being rotated about the shaft (9) by the drive shaft (7-8), and in that the said shaft is arranged on either side of the position of the sliding gear with means allowing, according to the direction of rotation of the drive shaft, a positioning of the mechanisms in an irreversibility function situation, and in the other direction in the deactivation position of the irreversibility function, temporarily and occasionally allowing the execution of a predefined load transfer manoeuvre, **characterized in that** the said shaft (9) is mounted idle and has an axial travel capacity.

2. Device according to Claim 1, **characterized in that** the shaft (9) receives, in its threaded central portion (9.1) a sliding gear (4) which is itself threaded on its whole thickness for a better distribution of the torque to be transmitted, and a better guidance, and **in that** the sliding gear (4) has an axial travel and is capable of rotating freely on the shaft (9) due to its contacts and engagements with gears (3) and (5), and **in that** the sliding gear (4) is arranged with a radial opening (4a) for receiving a driving bolt (22), the shaft having a hole (9d) for accommodating the bolt, and **in that** a clearance between the diameter of the bolt joined to the shaft (9) and the diameter of the hole (9d) formed in the hole receiving the said bolt in the sliding gear, allows the limited tilting of the said bolt.

3. Device according to Claims 1 and 2 together, **characterized in that,** under the sliding gear (4) are placed a free wheel (10) mounted clamped to the shaft (9), and a bowl-shaped friction part (11) surrounding the exterior of the said free wheel in a nonreturn function, and **in that** this subassembly is in permanent contact with a second friction part (12) mounted around the end of the shaft and floatingly against means (13) having an elastic deformation capacity;

4. Device according to Claim 3, **characterized in that** the floating friction part (12) has a bowl-shaped configuration of which the bottom phase is in contact and bears against the bottom phase of the fixed friction part (11), and in the bowl portion, it receives the means (13) prepared in the form of two Belleville washers, adjusted for a sufficient torque creating a static residual torque on the shaft (9).

5. Device according to Claim 4, **characterized in that** the washers (13) bear against a holding bearing ring which slightly overhangs the end of the shaft (9), and **in that** means (26) and (27) disposed at the end allow adjustment of the stall torque in case of wear of the friction means (11) and (12);

6. Device according to Claim 5, **characterized in that** the means (26) and (27) consist of a washer plate (26) centred in the guide opening of the shaft (9), with a caging bolt (27) passing through a holding flange fixed to the opposite wall of the casing.

7. Device according to Claim 4, **characterized in that** the floating friction ring (12) travels axially and is held in the radial position by fixed positioning arms or snugs (28) from the opposite inside wall of the casing.

8. Device according to Claims 1 and 2 together, **characterized in that** the other end of the shaft (9), beyond the threaded portion, has a smaller section seating (9b) defining a shoulder (9c) being centred in a recess provided for the purpose in the opposite wall of the said receiving casing, and **in that** a needle roller thrust bearing (16) is disposed between the wall or recess formed in the said casing wall and the shouldered part of the shaft (9) to provide a contact or not according to the operating phases, with or without a total immobilisation of the sliding gear (4).

9. Device according to Claim 2, **characterized in that** it comprises a ratchet wheel (15) and a spring pawl assembly (17), and **in that** the bringing together of the shaft (9) and the intermediate gear (5) clamps a brake shoe (18), ratchet wheel (15) and spring pawl (17) assembly, the whole being rotated by the pawl (17).

10. Device according to Claims 1 and 2, **characterized in that** it comprises a washer (16) mounted floatingly at the end of the gear (2) against the frame and provides an anti-jamming function of the brake assembly.

## Patentansprüche

1. Sicherheitsvorrichtung für ein mechanisches Getriebe mittels Blockierverzahnungen, wobei die Verzahnungen in ein Schutzgehäuse eines Untersetzungsgetriebes integriert sind, und mindestens eine Antriebswelle im Uhrzeigersinn oder entgegen dem Uhrzeigersinn angetrieben werden kann, und wobei das Untersetzungsgetriebe mit Winden zusammenwirken kann, und die Vorrichtung eine Welle (9) besitzt, die parallel zu mindestens einer Antriebswelle (7 - 8 ) montiert ist, und die Welle (9) sich zwischen den Wänden des Gehäuses drehen kann, und die Welle ein Schieberad (4) aufnimmt und mit diesem durch ein Verbindungselement (22) und ein Antriebselement verbunden ist, wobei das Schieberad von der Antriebswelle (7 - 8) drehend zur Welle (9) betätigt wird, und die Welle zu beiden Seiten der Position des Schieberades angeordnet ist, wobei Einrichtungen entlang der Drehrichtung der Antriebswelle eine Positionierung der Mechanismen bei Irreversibilität erlauben, und in der anderen Richtung bei Deaktivierung der Funktion der Irreversibilität temporär und punktuell die Ausführung eines bestimmten Transportes von Lasten erlauben, **dadurch gekennzeichnet, dass** die Welle (9) nicht im Antriebszustand montiert ist, und axial verschoben werden kann.

2. Vorrichtung nach Anspruch 1, **dadurch gekennzeichnet, dass** die Welle (9) in ihrem mittleren, mit einem Außengewinde versehenen Teil (9.1) ein Schieberad (4) aufnimmt, das selbst über seine gesamte Stärke zur besseren Verteilung des zu übertragenden Drehmomentes und einer besseren Führung mit einem Innengewinde versehen ist, und dass das Schieberad (4) axial verschoben ist und sich aufgrund seiner Kontakte und Anschlüsse zu den Ritzeln (3) und (5) frei an der Welle (9) drehen kann, und dass das Schieberad (4) mit einer radialen Öffnung (4a) zur Aufnahme eines Antriebsstiftes (22) versehen ist, wobei die Welle eine Öffnung (9d) zur Aufnahme des Stiftes aufweist, und dass ein Spiel zwischen dem Durchmesser des mit der Welle (9) verbundenen Stiftes und dem Durchmesser der Öffnung (9d), die in der Öffnung zur Aufnahme des Stiftes in dem Schieberad gebildet wird, ein begrenztes Kippen des Stiftes ermöglicht.

3. Vorrichtung nach Anspruch 1 und 2 zusammen, **dadurch gekennzeichnet, dass** unterhalb des Schieberades (4) ein freies Rad (10) angeordnet ist, das fest an der Welle (9) montiert ist, sowie ein Reibelement (11) in Form einer Wanne, das das freie Rad in einer Funktion der Rückdrehsicherung von außen umgibt, und dass diese Untereinheit in ständigem Kontakt mit einem zweiten Reibelement (12) steht, das um das Ende der Welle herum und schwimmend zu den Elementen (13) montiert ist, die sich elastisch verformen können.

4. Vorrichtung nach Anspruch 3, **dadurch gekennzeichnet, dass** das schwimmende Reibelement (12) eine Konfiguration in Form einer Wanne aufweist, deren Bodenseite mit der Bodenseite des feststehenden Reibelementes (11) in Verbindung steht und auf ihr aufliegt, und dass es in dem Wannenabschnitt das Element (13) aufnimmt, das in Form von zwei Tellerfedern gebildet ist, die auf ein Drehmoment eingestellt sind, das ausreicht, um ein statisches Restdrehmoment an der Welle (9) zu bilden.

5. Vorrichtung nach Anspruch 4, **dadurch gekennzeichnet, dass** die Tellerfedern (13) auf einem Halte-Laufring aufliegen, der leicht über das Ende der Welle (9) überragt, und dass die Elemente (26) und (27), die am Ende angeordnet sind, es ermöglichen, das Drehmoment der Verkeilung im Falle der Abnutzung der Reibelemente (11) und (12) erneut anzupassen.

6. Vorrichtung nach Anspruch 5, **dadurch gekennzeichnet, dass** die Elemente (26) und (27) aus einer Scheibe (26) bestehen, die in der Öffnung der Führung der Welle (9) zentriert ist, wobei eine Zugschraube (27) durch einen Halteflansch hindurchgeht, der an der Wand gegenüber dem Gehäuse befestigt ist.

7. Vorrichtung nach Anspruch 4, **dadurch gekennzeichnet, dass** sich der schwimmende Reibring (12) axial verschiebt, und von Zapfen (28) oder Positioniernocken, die an der Innenwand gegenüber dem Gehäuse befestigt sind, in radialer Position gehalten wird.

8. Vorrichtung nach den Ansprüchen 1 und 2 zusammen, **dadurch gekennzeichnet, dass** das andere Ende der Welle (9) jenseits des Gewindeabschnittes eine Auflagefläche mit geringerem Querschnitt (9b) besitzt, die einen Vorsprung bildet, indem sie in einer Aufnahme zentriert ist, die zu diesem Zweck in der Wand gegenüber dem Aufnahmegehäuse vorgesehen ist, und dass ein Axialnadellager (16) zwischen der Wand oder der Aufnahme angeordnet ist, die in der Wand des Gehäuses und dem Abschnitt der Welle (9) mit einem Vorsprung gebildet wird, um einen Kontakt gemäß den Funktionsphasen zu gewährleisten oder nicht zu gewährleisten, und zwar mit einer vollständigen Blockierung des Schieberades (4) oder keiner vollständigen Blockierung des Schieberades (4).

9. Vorrichtung nach Anspruch 2, **dadurch gekennzeichnet, dass** sie eine Ratsche oder ein Sperrrad (15) und eine Einheit aus Knagge und Rückholfeder (17) besitzt, und dass die Annäherung von Welle (9) und Zwischenrad (5) eine Einheit von Ferodo-Gleiter (18), Sperrrad (15) und Knagge mit Rückholfeder (17) einspannt, wobei das Ganze durch die Knagge (17) in Drehung versetzt wird.

10. Vorrichtung nach den Ansprüchen 1 und 2, **dadurch gekennzeichnet, dass** sie eine Scheibe (16) besitzt, die am Ende des Ritzels (5) gegen den Rahmen schwimmend montiert ist, und eine Anti-Festlauffunktion für die gesamte Bremsanlage gewährleistet.
